# EUROPÄISCHE PATENTSCHRIFT

(11) **EP 3 987 158 B1**
(45) Veröffentlichungstag und Bekanntmachung des Hinweises auf die Patenterteilung: **17.01.2024**
(21) Anmeldenummer: 20734139.7
(22) Anmeldetag: 17.06.2020
(51) Int. Cl.: F01M 1/02, F01M 1/12, F01M 11/00, F04C 2/00, F04C 2/08, F04C 15/00, F04C 2/14, F04C 11/00

(54) **PUMPENSTUFENANORDNUNG, AUSSENZAHNRADPUMPE, VERWENDUNG EINER PUMPENSTUFENANORDNUNG UND FAHRZEUGGETRIEBE**
PUMP STAGE ASSEMBLY, EXTERNAL GEAR PUMP, USE OF A PUMP STAGE ASSEMBLY AND VEHICLE TRANSMISSION
ENSEMBLE ÉTAGES DE POMPE, POMPE À ENGRENAGES EXTÉRIEURS, UTILISATION D'UN ENSEMBLE ÉTAGES DE POMPE ET TRANSMISSION DE VÉHICULE

(30) Priorität: 18.06.2019 DE 102019208847
(43) Veröffentlichungstag der Anmeldung: 27.04.2022
(73) Patentinhaber: Vitesco Technologies GmbH, 93055 Regensburg (DE)
(72) Erfinder: BÖHM, Christian, 81737 München (DE)
(74) Vertreter: Vitesco Technologies
(86) Internationale Anmeldenummer: PCT/EP2020/066834
(87) Internationale Veröffentlichungsnummer: WO 2020/254450

(56) Entgegenhaltungen:
- EP-A2- 0 305 689
- JP-A- H0 559 925
- JP-A- H03 107 516
- JP-A- 2006 132 342
- US-A1- 2017 107 872

## Beschreibung

Die vorliegende Erfindung betrifft eine Einsteckpumpe zur Schmierölversorgung zumindest eines Verbrauchers. Die vorliegende Erfindung betrifft ferner eine Verwendung einer solchen Einsteckpumpe zur Schmierölversorgung eines zumindest ein- oder zweistufigen Getriebes zum Antrieb eines Fahrzeugs, insbesondere Elektro-Fahrzeugs sowie ein Fahrzeuggetriebe.

Bei Fahrzeugen kommen zur Schmierung von Verbrennungsmotoren und Getrieben sogenannte Nasssumpfschmiersysteme oder Trockensumpfschmiersysteme zum Einsatz.

Eine Trockensumpfschmierung wird dabei meistens nur bei Sportwagen, Geländewagen und Motorädern angewendet. Dabei sichert sie die Schmierung auch bei extremen Kurvenfahrten oder Schrägfahrten im Gelände, indem sie verhindert, dass auf Grund hoher Fliehkräfte oder entsprechender Schräglagen Schmieröl aus einem Bereich eines Ansaugstutzens einer Ölpumpe wegfließt. Dies wird dadurch gewährleistet, dass neben einer Ölwanne, die als solche - anders als bei einer Nasssumpfschmierung - trocken gehalten wird, auch ein separater Öltank verwendet wird, der als solcher das Schmieröl bevorratet. Man spricht dabei bezüglich der trocken gehaltenen Ölwanne auch von einem Ölsumpf - auch Trockensumpf genannt -, aus dem meistens ein Schmierölluftgemisch angesaugt wird.

Durch ein geringeres Volumen einer solchen Ölwanne gewinnt man mit der Trockensumpfschmierung mehr Bodenfreiheit, so dass z.B. ein Motor tiefer eingebaut werden kann, was wiederum mit einem niedrigeren Schwerpunkt einhergeht und wovon die zuvor genannten Sportwagen oder Geländewagen profitieren.

Ein Trockensumpfschmiersystem umfasst dabei eine oder mehrere Pumpen-Saugstufen zur Förderung des Schmieröls aus dem Ölsumpf in den Öltank und eine oder mehrere Pumpen-Druckstufen zur Förderung des Schmieröls aus dem Öltank zu einem Verbraucher. Das Fördervolumen der Pumpen-Druckstufen ist dabei immer geringer als das Fördervolumen der Pumpen-Saugstufen.

Aus den Druckschriften JP H03107516 A und JP H0559925 A ist jeweils eine Au-ßenzahnrad-Ölpumpe bekannt.

Eine Aufgabe einer Ausführung der vorliegenden Erfindung ist es, ein Trockensumpfschmiersystem zu verbessern.

Diese Aufgabe wird durch eine Einsteckpumpe mit den Merkmalen des Anspruchs 1 gelöst. Die Ansprüche 11 und 13 stellen eine Verwendung einer solchen Einsteckpumpe zur Schmierölversorgung eines zumindest ein- oder zweistufigen Getriebes zum Antrieb eines Fahrzeugs, insbesondere Elektro-Fahrzeugs bzw. ein Fahrzeuggetriebe mit einer solchen Einsteckpumpe unter Schutz. Vorteilhafte Ausführungsformen der Erfindung sind Gegenstand der Unteransprüche.

Es wird eine Einsteckpumpe zur Anordnung an einem zumindest ein- oder zweistufigen Getriebe zum Antrieb eines Fahrzeugs vorgeschlagen, wobei die Einsteckpumpe an einem Gehäuse des Getriebes anflanschbar ist und dabei in das Gehäuse hineinragt, wobei die Einsteckpumpe zur Schmierölversorgung zumindest eines Verbrauchers ausgebildet ist. Die Einsteckpumpe umfasst dabei:
- mindestens zwei Pumpen-Saugstufen zur Ansaugung eines Schmieröls aus einem als Trockensumpf fungierenden ersten Ölbehälter und zur Förderung des Schmieröls in einen als Öltank fungierenden zweiten Ölbehälter sowie
- mindestens zwei Pumpen-Druckstufen zur Ansaugung des Schmieröls aus dem zweiten Ölbehälter und zur Förderung zum Verbraucher.

Die Pumpen-Saugstufen und die Pumpen-Druckstufen sind dabei zueinander beabstandet in einem Pumpengehäuse angeordnet und weisen eine gemeinsame Antriebswelle auf.

Die Pumpen-Saugstufen sind dabei durch eine erste Anordnung von mindestens drei miteinander kämmenden Außenzahnrädern gebildet, die in einer ersten Ebene liegen. Die Pumpen-Druckstufen hingegen sind durch eine zweite Anordnung von mindestens drei miteinander kämmenden Außenzahnrädern gebildet, die in einer zweiten Ebene liegen, wobei die erste Ebene und die zweite Ebene parallel zueinander liegen.

Dabei ist mittels einer ersten Pumpen-Saugstufe - über einen ersten Eingang - aus einem ersten Bereich des ersten Ölbehälters ein erster Fördervolumenstrom ansaugbar und mittels einer zweiten Pumpen-Saugstufe - über einen zweiten Eingang - aus einem zweiten Bereich des ersten Ölbehälters ein zweiter Fördervolumenstrom ansaugbar. Die beiden Fördervolumenströme vermischen sich im Pumpengehäuse, bevor sie den zweiten Ölbehälter über je einen Ausgang erreichen.

Es wird dabei fermer vorgeschlagen, zumindest zwei der jeweiligen Zahnradmittelpunkte der ersten Außenzahnradanordnung sowie zumindest zwei der jeweiligen Zahnradmittelpunkte der zweiten Außenzahnradanordnung in einer gemeinsamen, dritten Ebene anzuordnen, welche das Pumpengehäuse in einer Längsrichtung schneidet und welche als solche orthogonal zur zuvor genannten ersten und zweiten Ebene liegt.

Die vorgeschlagene Pumpenstufenanordnung ermöglicht vorteilhafterweise eine Umsetzung eines Trockensumpfsystems mit nur sechs Außenzahnrädern. Die vorgeschlagene Pumpenstufenanordnung stellt dabei eine sehr kompakte Pumpenlösung dar. Dabei wird die Anzahl von rotierenden Bauteilen minimal gehalten, was wiederum mit einer Reduktion von Verlustreibung einhergeht. Zudem wird dadurch auch an Gewicht eingespart.

Grundsätzlich lassen sich diese Außenzahnradanordnungen je nach Bedarf entsprechend erweitern.

Dabei ist aus dem zweiten Ölbehälter bzw. dem Öltank mittels einer ersten Pumpen-Druckstufe - über einen ersten Eingang - ein erster Fördervolumenstrom und mittels einer zweiten Pumpen-Druckstufe - über einen zweiten Eingang - ein zweiter Fördervolumenstrom ansaugbar. Die beiden Fördervolumenströme vermischen sich im Pumpengehäuse, bevor sie die jeweiligen Verbraucher über je einen Ausgang erreichen.

Diese vorgeschlagene Ausführung ermöglicht vorteilhafterweise eine Umsetzung eines Trockensumpfsystems mit nur sechs Außenzahnrädern. Auch diese Ausführung stellt eine sehr kompakte Pumpenlösung dar, bei der die Anzahl von rotierenden Bauteilen minimal gehalten wird.

Nach einer weiteren, besonders vorteilhaften Ausführung der vorliegenden Erfindung werden die jeweiligen Zahnradmittelpunkte aller Zahnräder der ersten Außenzahnradanordnung sowie die jeweiligen Zahnradmittelpunkte aller Zahnräder der zweiten Außenzahnradanordnung in der besagten Ebene angeordnet. Dadurch wird eine insgesamt noch kompaktere Pumpenlösung ermöglicht.

Es wird ferner vorgeschlagen, dass der erste Ölbehälter und/oder der zweite Ölbehälter ein Ölreservoir im Inneren eines zumindest ein- oder zweistufigen Getriebes zum Antrieb eines Fahrzeugs, insbesondere eines Elektro-Fahrzeugs bildet/bilden.

Die Einsteckpumpe kann dabei vorteilhafterweise als ein im Wesentlichen zylinderförmiger Körper ausgebildet sein, wobei das den zylinderförmigen Körper bildende Pumpengehäuse zumindest teilweise oder zweckmäßigerweise zumindest größtenteils aus einem Kunststoff gespritzt ist.

Nach einer weiteren Ausführung der vorliegenden Erfindung ist eine hydraulische Anbindung der Pumpen-Saugstufen und/oder der zumindest einen Pumpen-Druckstufe zum Getriebe-Ölreservoir radial zum jeweiligen Abschnitt des Pumpengehäuses ausgeführt. Dadurch wird eine noch kompaktere Pumpenlösung ermöglicht. Dabei kann eine hydraulische Anbindung zur Druckseite der zumindest einen Pumpen-Druckstufe stirnseitig am in das Getriebegehäuse hineinragenden Ende des Pumpengehäuses vorgesehen sein.

Nach einer weiteren Ausführung der vorliegenden Erfindung kann eine hydraulische Anbindung zur Saugseite der Pumpen-Saugstufen stirnseitig am in das Getriebegehäuse hineinragenden Ende des Pumpengehäuses vorgesehen sein.

Nach einer weiteren Ausführung der vorliegenden Erfindung kann eine hydraulische Anbindung zur Druckseite der Pumpen-Saugstufen sowie zur Saugseite der zumindest einen Pumpen-Druckstufe stirnseitig am in das Getriebegehäuse hineinragenden Ende des Pumpengehäuses vorgesehen sein.

Nach einer weiteren Ausführung der vorliegenden Erfindung kann die gemeinsame Antriebswelle elektromotorisch und/oder mechanisch angetrieben sein.

Ferner wird eine Verwendung der zuvor beschriebenen Einsteckpumpe zur Schmierölversorgung eines zumindest ein- oder zweistufigen Getriebes zum Antrieb eines Fahrzeugs, insbesondere Elektro-Fahrzeugs vorgeschlagen.

Zudem wird vorgeschlagen, die Einsteckpumpe auch zur Kühlung eines das Elektro-Fahrzeug antreibenden Elektro-Motors zu verwenden.

Darüber hinaus wird Fahrzeuggetriebe zum Antrieb eines Fahrzeugs, insbesondere Elektro-Fahrzeugs vorgeschlagen, wobei das Fahrzeuggetriebe eine Einsteckpumpe der zuvor beschriebenen Art aufweist.

Weitere vorteilhafte Weiterbildungen der vorliegenden Erfindung ergeben sich aus den Unteransprüchen und der nachfolgenden Beschreibung bevorzugter Ausführungen. Hierzu zeigen schematisiert:
- Fig. 1: eine zwei Pumpen-Saugstufen bildende, erste Zahnradanordnung ZA₁ sowie eine damit kombinierte, zwei Pumpen-Druckstufen bildende, zweite Zahnradanordnung ZA₂,
- Fig. 1a: die in Fig. 1 gezeigt erste Zahnradanordnung ZA₁ in einer vergrößerten Darstellung,
- Fig. 2: ein Pumpengehäuse PG mit den in Fig. 1 gezeigten zwei Zahnradanordnungen ZA₁, ZA2,
- Fig. 3: eine Pumpeneinstecklösung in einer *ersten* Ausführungsform,
- Fig. 4: eine Pumpeneinstecklösung in einer *zweiten* Ausführungsform,
- Fig. 5: eine Pumpeneinstecklösung in einer *dritten* Ausführungsform,
- Fig. 6: eine Darstellung von Zahnradausbildungen sowie
- Fig. 7: eine Darstellung von Förderströmen.

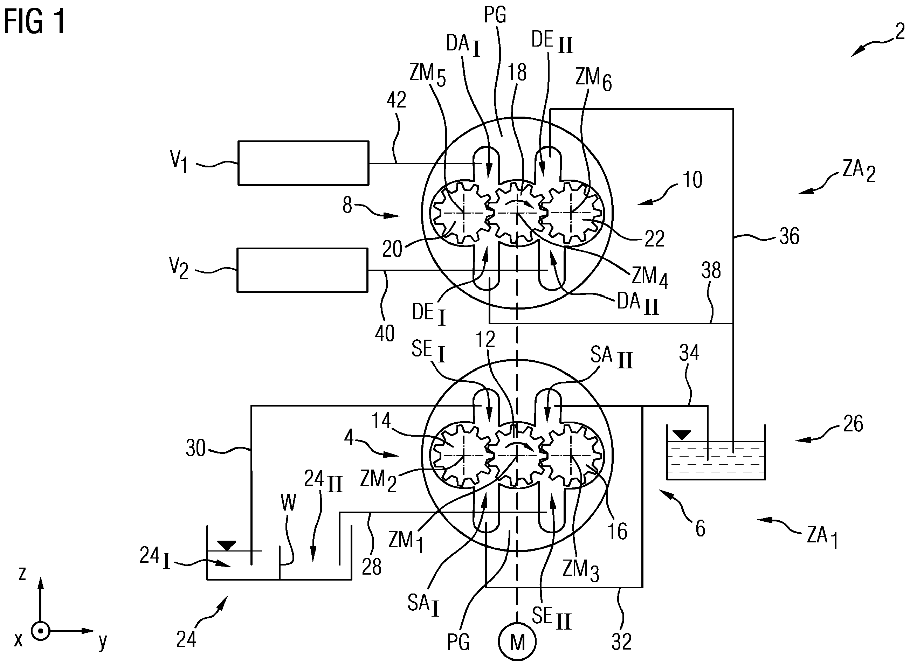

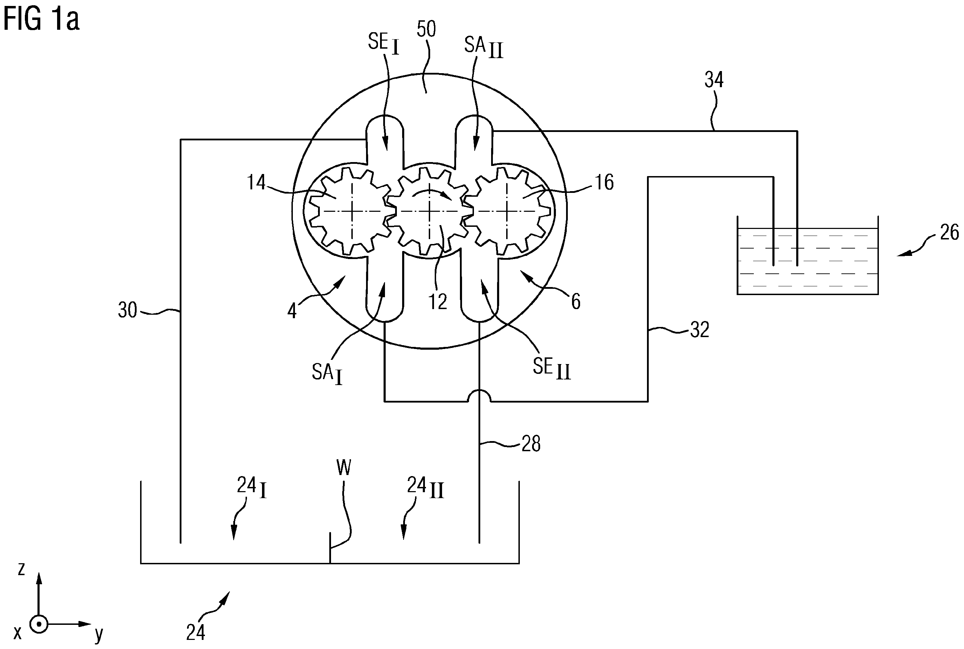

Fig. 1 veranschaulicht eine vorgeschlagene Pumpenstufenanordnung 2 als Teil einer mehrfach wirkenden Außenzahnradpumpe, welche einerseits zur Schmierölversorgung eines zumindest ein- oder zweistufigen Fahrzeuggetriebes V₁ zum Antrieb eines Elektro-Fahrzeugs und andererseits zur Kühlung eines das Elektro-Fahrzeugs antreibenden Elektro-Motors V₂ verwendet wird, der als solcher mit dem Fahrzeuggetriebe V₁ eine Antriebseinheit bildet.

Die Pumpenstufenanordnung 2 umfasst dabei zwei Pumpen-Saugstufen 4, 6 zur Ansaugung eines Schmieröls aus einem - als Trockensumpf fungierenden - ersten Ölbehälter 24 und zur Förderung des Schmieröls in einen zweiten Ölbehälter 26 - den eigentlichen Ölbehälter bzw. Öltank - sowie zwei Pumpen-Druckstufen 8, 10 zur Ansaugung des Schmieröls aus dem zweiten Ölbehälter 26 und zur Förderung zu den beiden Verbrauchern V₁, V₂.

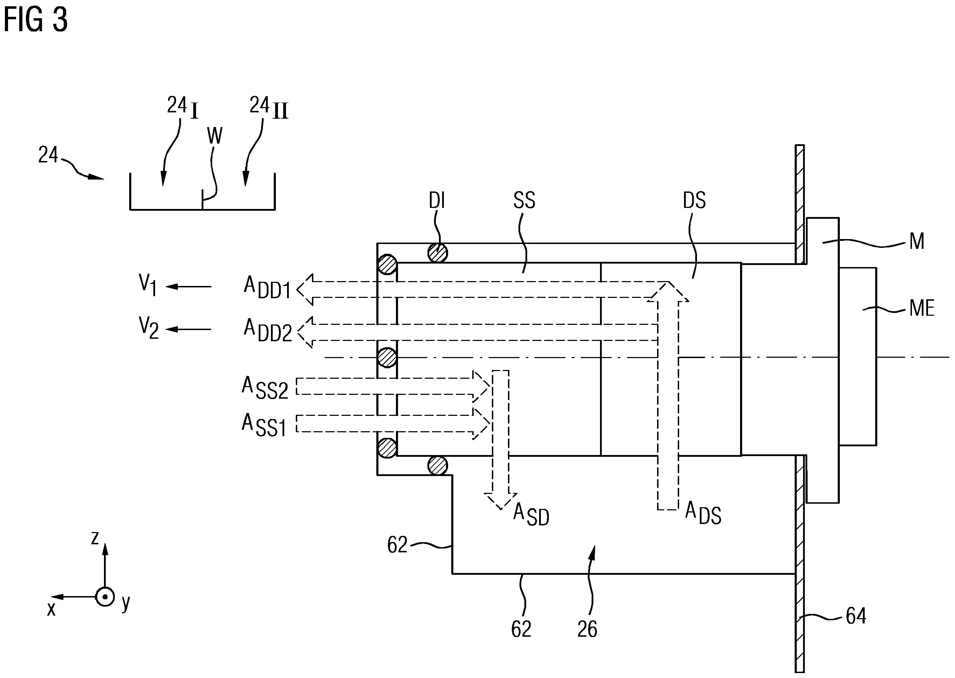

Die Pumpenstufenanordnung 2 ist dabei Teil einer - zumindest im Wesentlichen zylinderförmigen - Einsteckpumpenlösung, die als solche an einem Gehäuse 62, 64 des Fahrzeuggetriebes angeflanscht ist, wobei die Einsteckpumpenlösung in das Gehäuse 62, 64 hineinragt (vgl. Fig. 3, Fig. 4, Fig. 5). Das den zylinderförmigen Körper bildende Pumpengehäuse PG ist dabei vorteilhafterweise aus einem Kunststoff gespritzt.

Die Pumpen-Saugstufen 4, 6 und die Pumpen-Druckstufen 8, 10 sind zueinander beabstandet im Pumpengehäuse PG angeordnet und weisen eine gemeinsame Antriebswelle 56 auf. Diese Antriebswelle 56 ist dabei im Rahmen der hier vorgeschlagenen Ausführungsformen durch einen Elektromotor (E-Motor) M angetrieben. Grundsätzlich können aber die hier vorgeschlagenen Einsteckpumpenlösungen auch rein mechanisch angetrieben sein.

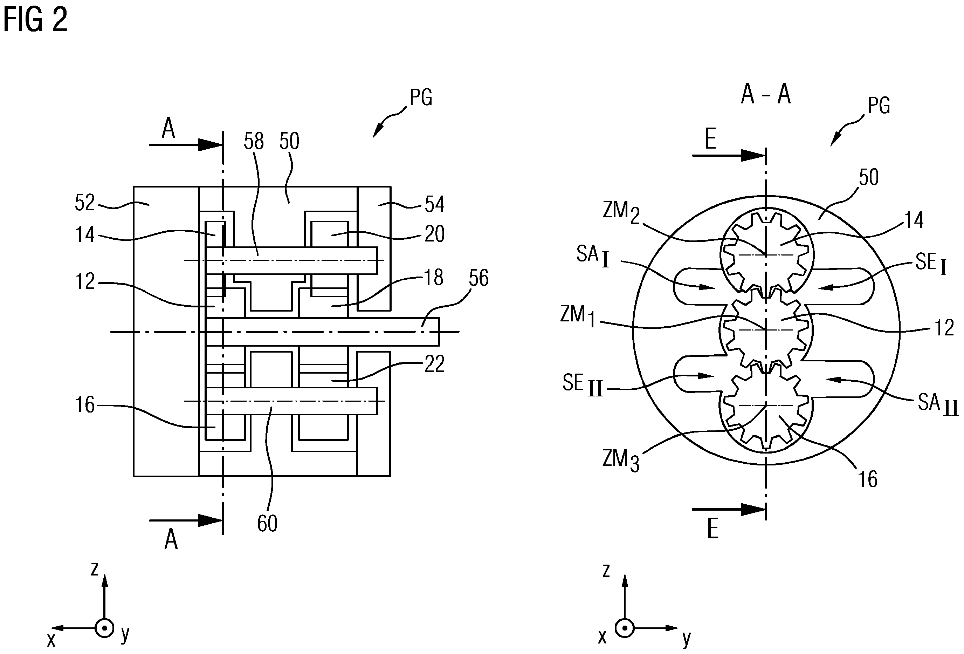

Die Pumpen-Saugstufen 4, 6 werden dabei durch eine erste Anordnung ZA₁ von drei miteinander kämmenden Außenzahnrädern 12, 14, 16 gebildet, wohingegen die Pumpen-Druckstufen 8, 10 durch eine zweite Anordnung ZA₂ von drei miteinander kämmenden Außenzahnrädern 18, 20, 22 gebildet werden. Die Außenzahnradanordnung ZA₁ liegt dabei in einer ersten Ebene und die Außenzahnradanordnungen ZA₂ in einer dazu parallelen zweiten Ebene. Fig. 2 veranschaulicht dabei ein Pumpengehäuse PG mit einem Gehäuseteil 50, in welchem sowohl die beiden Außenzahnradanordnungen ZA₁, ZA₂ als auch die Antriebswelle 56 sowie zwei Achsen 58, 60 aufgenommen sind. Die Antriebswelle 56 erstreckt sich dabei durch die Zahnräder 12, 18 und treibt diese an, wohingegen sich die Achse 58 durch die getriebenen Zahnräder 14, 20 und die Achse 60 durch die getriebenen Zahnräder 16, 22 erstreckt. Bei entsprechender Auslegung können anstelle der Achsen 58, 60 auch Wellen 58, 60 vorgesehen sein. Der Gehäuseteil 50 ist dabei mit einem ersten Gehäusedeckel 52 und mit einem zweiten Gehäusedeckel 54 gefügt (vgl. Fig. 2). Das Pumpengehäuse PG, 50, 52, 54 ist ferner mit dem zuvor genannten E-Motor M kombiniert, welcher die Antriebswelle 56 antreibt, auf welcher die beiden treibenden Zahnräder 12, 18 angeordnet sind.

Dabei sind die jeweiligen Zahnradmittelpunkte ZM₁, ZM₂, ZM₃ aller Zahnräder der ersten Außenzahnradanordnung ZA₁ sowie die jeweiligen Zahnradmittelpunkte ZM₄, ZM₅, ZM₆ aller Zahnräder der zweiten Außenzahnradanordnung ZA₂ in einer gemeinsamen, dritten Ebene E - E angeordnet, welche das Pumpengehäuse PG in einer Längsrichtung bzw. Längserstreckung X - X schneidet (vgl. Fig. 2). Die Ebene E - E liegt dabei orthogonal zur zuvor genannten ersten und zweiten Ebene der jeweiligen Außenzahnradanordnung ZA₁, ZA₂.

Über zwei Ansaugleitungen 28, 30, die in jeweils einen von zwei Bereichen 24_{I}, 24_{II} des durch eine Wandung W unterteilten Trockensumpfs 24 hineinragen, wird je nach Füllstand das Schmieröl oder - und dies ist der Normalfall - nur ein Schmieröl-Luftgemisch angesaugt. Die den Trockensumpfs 24 unterteilende Wandung W hilft dabei, den Trockensumpfs 24 zu evakuieren, denn es gilt den Trockensumpf 24 in jeder Fahrzeuglage möglichst trocken bzw. leer gezogen zu halten.

Die Ansaugleitung 30 führt dabei zu einem ersten Pumpen-Saugstufen-Sauganschluss SE_{I} der durch die beiden Zahnräder 12, 14 gebildeten ersten Pumpen-Saugstufe 4, wohingegen die Ansaugleitung 28 zu einem zweiten Pumpen-Saugstufen-Sauganschluss SE_{II} der durch die beiden Zahnräder 12, 16 gebildeten zweiten Pumpen-Saugstufe 6 führt. Vom einem ebenfalls durch die beiden Zahnräder 12, 14 gebildeten ersten Pumpen-Saugstufen-Druckanschluss SA_{I} führt eine Leitung 32 in den Öltank 26. Ebenso führt vom einem ebenfalls durch die beiden Zahnräder 12, 16 gebildeten zweiten Pumpen-Saugstufen-Druckanschluss SA_{II} eine Leitung 34 in den Öltank 26 (vgl. Fig. 1a). Alternativ dazu kann die Leitung 32 auch in die Leitung 34 münden, die als solche dann in den Öltank mündet (vgl. Fig. 1).

Über eine Ansaugleitung 36 wird das Schmieröl dann einerseits über einen ersten Pumpen-Druckstufen-Sauganschluss DE_{I} (vgl. Ansaugleitung 38, die von der Ansaugleitung 36 abzweigt und zum Pumpen-Druckstufen-Sauganschluss DE_{I} führt) und einen ersten Pumpen-Druckstufen-Druckanschluss DA_{I} der ersten Pumpen-Druckstufe 8 - die jeweils durch die beiden Zahnräder 18, 20 gebildet sind - und eine Leitung 42 zum Fahrzeuggetriebe V₁ gefördert. Andererseits wird das Schmieröl auch über einen zweiten Pumpen-Druckstufen-Sauganschluss DE_{II} und einen zweiten Pumpen-Druckstufen-Druckanschluss DA_{II} der zweiten Pumpen-Druckstufe 10 - die jeweils durch die beiden Zahnräder 18, 22 gebildet sind - und eine Leitung 42 zum Elektro-Motor V₂ gefördert.

In einer vorgeschlagenen *ersten* Ausführungsform der Pumpeneinstecklösung (vgl. Fig. 3) ist ein Öltank 26 im Inneren des Getriebegehäuses 62, 64 ausgebildet. Eine einzige oder auch zwei Pumpen-Druckstufen DS ist/sind dabei zwischen einem getriebewandseitig angeordneten E-Motor M und zwei Pumpen-Saugstufen SS angeordnet. Die hydraulische Anbindung der Saugseite der Pumpen-Druckstufe(n) DS (vgl. Ansaugung A_{DS}) einerseits und der Druckseite (vgl. Ausgang A_{SD}) der Pumpen-Saugstufen SS andererseits zum Öltank 26 sind dabei jeweils radial zum jeweiligen Abschnitt des Pumpengehäuses PG ausgeführt. Die Pumpen-Druckstufe(n) DS ist/sind dabei gegenüber den Pumpen-Saugstufen SS entsprechend umlaufend abgedichtet (vgl. Dichtung DI). Eine hydraulische Anbindung der Pumpeneinstecklösung zu einem davon separierten Trockensumpf 24 einerseits und zu den beiden zuvor genannten Verbrauchern andererseits ist dabei jeweils stirnseitig am in das Getriebegehäuse 62, 64 hineinragenden Pumpenende vorgesehen (vgl. Ansaugung A_{SS1}, Ansaugung A_{SS2} der jeweiligen Saugstufe SS und Ausgang A_{DD1}, Ausgang A_{DD2} der jeweiligen Druckstufe DS).

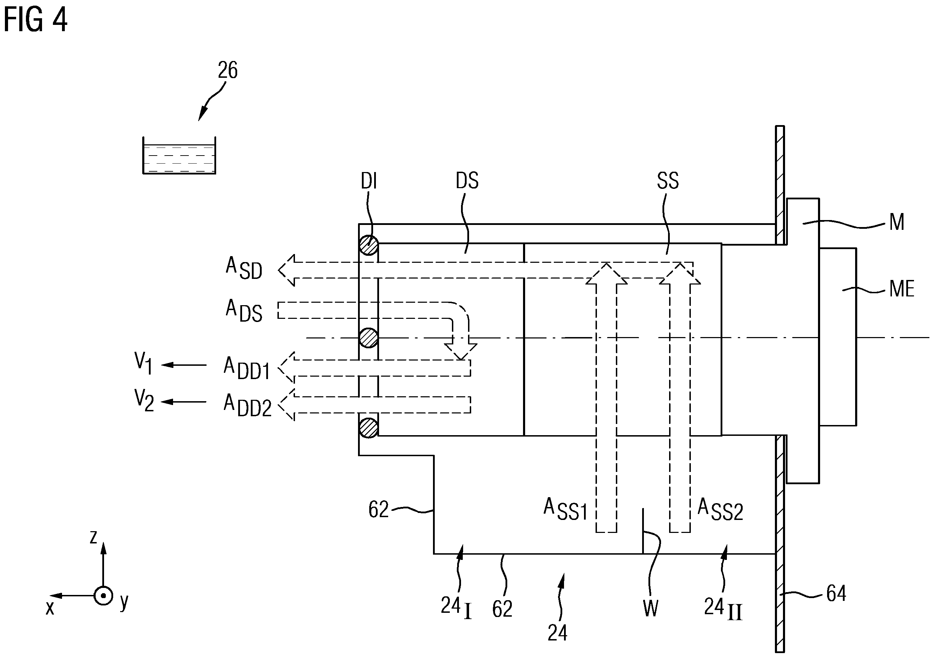

Alternativ dazu ist in einer vorgeschlagenen *zweiten* Ausführungsform der Pumpeneinstecklösung (vgl. Fig. 4) ein Trockensumpf 24 im Inneren des Getriebegehäuses 62, 64 ausgebildet. Zwei Pumpen-Saugstufen SS sind dabei zwischen einem getriebewandseitig angeordneten E-Motor M und zwei Pumpen-Druckstufen DS angeordnet. Die hydraulische Anbindung der beiden Pumpen-Saugstufen SS (vgl. Ansaugung A_{SS1}, Ansaugung A_{SS2}) zum Trockensumpf 24 ist dabei jeweils radial zum Pumpengehäuse PG ausgeführt. Die Pumpen-Druckstufen DS sind dabei gegenüber den Pumpen-Saugstufen SS entsprechend umlaufend abgedichtet (vgl. Dichtung DI). Eine hydraulische Anbindung der Pumpeneinstecklösung zu einem davon separierten Öltank 26 einerseits und zu den beiden zuvor genannten Verbrauchern V₁, V₂ andererseits ist dabei jeweils stirnseitig am in das Getriebegehäuse 62, 64 hineinragenden Pumpenende vorgesehen (vgl. druckseitigen Ausgang A_{SD} der Pumpen-Saugstufen SS, Ansaugung A_{DS} der Pumpen-Druckstufen DS, druckseitige Ausgänge A_{DD1}, Ausgang A_{DD2} der Pumpen-Druckstufen DS).

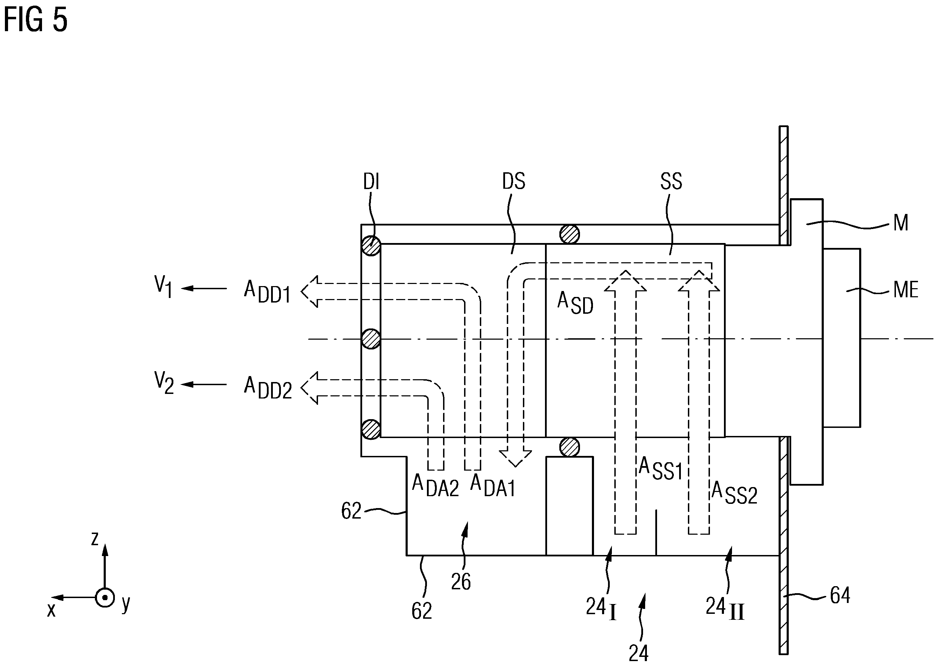

In einer vorgeschlagenen *dritten* Ausführungsform der Pumpeneinstecklösung (vgl. Fig. 5) hingegen, sind sowohl ein Öltank 26 als auch ein durch eine Wandung W unterteilter Trockensumpf 24_{I}, 24_{II} im Inneren des Getriebegehäuses 62, 64 ausgebildet. Der Öltank 26 ist dabei ferner gegenüber dem Trockensumpf 24 entsprechend abgedichtet (vgl. Dichtung DI). Zwei Pumpen-Saugstufen SS sind dabei zwischen einem getriebewandseitig angeordneten E-Motor M und zwei Pumpen-Druckstufen DS angeordnet. Die hydraulische Anbindung der beiden Pumpen-Saugstufen SS (vgl. Ansaugung A_{SS1}, Ansaugung A_{SS2} der Pumpen-Saugstufen SS) zum Trockensumpf 24_{I}, 24_{II} einerseits und der beiden Pumpen-Druckstufen DS zum Öltank 26 andererseits (Ansaugung A_{DA1}, Ansaugung A_{DA2} der Pumpen-Druckstufen DS) sind dabei jeweils radial zum Pumpengehäuse PG ausgeführt. Auch führt die hydraulische Anbindung des druckseitigen Ausgangs A_{SD} der beiden Pumpen-Saugstufen SS radial zum Pumpengehäuse PG in den Öltank 26. Die Pumpen-Druckstufen DS sind dabei gegenüber den Pumpen-Saugstufen SS entsprechend umlaufend abgedichtet (vgl. Dichtung DI). Eine hydraulische Anbindung der Pumpeneinstecklösung zu den beiden zuvor genannten Verbrauchern V₁, V₂ ist dabei jeweils stirnseitig am in das Getriebegehäuse 62, 64 hineinragenden Pumpenende vorgesehen (vgl. Ausgang A_{DD1}, Ausgang A_{DD2} der Pumpen-Druckstufen DS).

All diesen Ausführungsformen ist gemein, dass eine Motorelektronik ME außerhalb des Getriebegehäuses 62, 64 angeordnet ist (vgl. Fig. 3, Fig. 4, Fig. 5; jeweils rechts von der Anflanschung). Dies ermöglicht zum einen eine einfache elektrische Kontaktierung des E-Motors bzw. der Motorelektronik ME und zum anderen einen entsprechenden Wärmeaustausch der Motorelektronik ME mit der Umgebung.

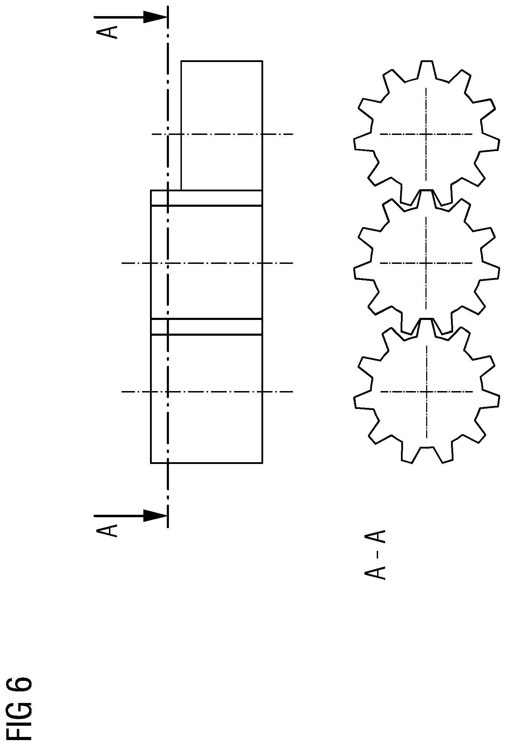

Fig. 6 veranschaulicht eine Ausbildung dreier, zwei Pumpen-Saugstufen oder Pumpen-Druckstufen bildender und miteinander kämmender Außenzahnräder, wobei vorzugsweise das mittlere Zahnrad das geriebene Zahnrad ist. Alle drei Zahnräder dieser Außenzahnradanordnung haben dabei die gleiche Querschnittsgeometrie, d.h. auch die gleiche Zähnezahl. Die beiden äußeren Zahnräder haben zudem den gleichen Achsabstand zum mittleren Zahnrad. Lediglich das rechte Zahnrad weist beispielsweise gegenüber den beiden anderen Zahnrädern eine kürzere Längserstreckung auf. Grundsätzlich können diese Achsabstände aber auch unterschiedlich ausfallen. Auch können die Zähnezahlen der beiden äußeren Außenzahnräder gegenüber dem inneren Außenzahnrad abweichend festgelegt sein.

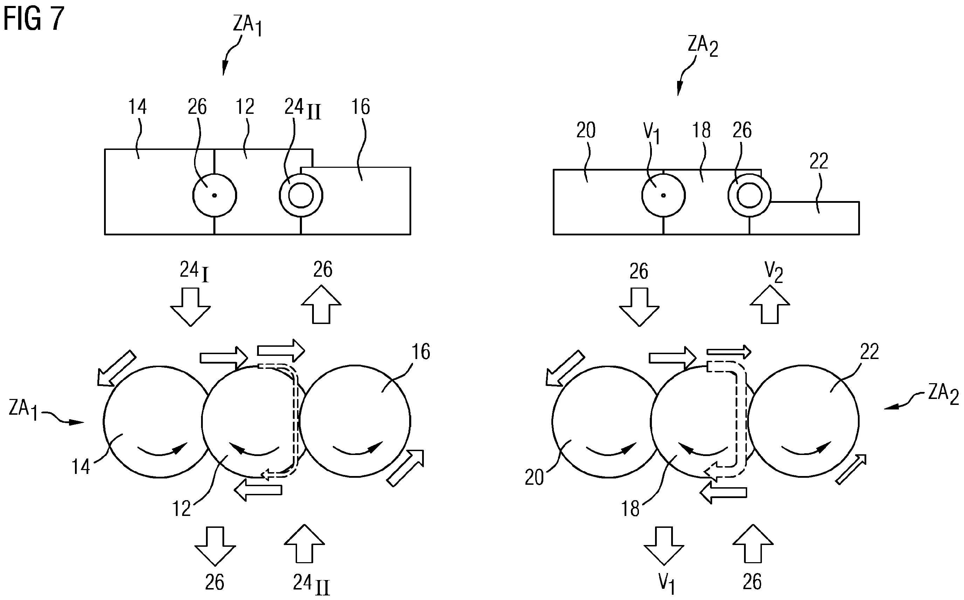

Fig. 7 veranschaulicht schematisch und beispielhaft eine Aufteilung und Vermengung von Förderströmen, wie sie sich zum einen bezüglich der beiden Pumpen-Saugstufen (vgl. ZA₁) und zum anderen bezüglich der beiden Pumpen-Druckstufen (vgl. ZA₂) innerhalb des Pumpengehäuses PG darstellen. Während die beiden Pumpen-Saugstufen einen Luftstrom bzw. Öl-Luftstrom aus dem Trockensumpf 24_{I}, 24_{II} (Bereich 24_{I}, Bereich 24_{II}) in den Öltank 26 fördern, fördern die beiden Pumpen-Druckstufen einen Ölstrom vom Öltank 26 zu den jeweils zugeordneten Verbrauchern V₁, V₂. Die einzelnen Dicken der Pfeile veranschaulichen dabei qualitativ einen entsprechenden Fördervolumenstrom. Grundsätzlich können die jeweiligen Zuflüsse und Abflüsse bezüglich der einzelnen Pumpenstufen je nach Bedarf festgelegt werden, und zwar über eine entsprechende Außenzahnradgestaltung (vgl. dazu die einzelnen, unterschiedlichen Zahnradlängen in Fig. 7).

Die im Rahmen dieser Offenbarung beschriebenen Einsteckpumpenlösungen ermöglichen jeweils eine sehr kompakte Pumpenlösung, die sich zur beschriebenen Anflanschung an das Fahrzeuggetriebe V₁ eignet. Dabei die wird die Anzahl von rotierenden Bauteilen minimal gehalten, was wiederum mit einer Reduktion von Verlustreibung einhergeht. Zudem wird dadurch auch an Gewicht eingespart.

Mit den beschriebenen Einsteckpumpenlösungen ist jeweils ein Trockensumpfsystem mit nur jeweils sechs Außenzahnrädern umgesetzt.

Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen und diesen äquivalenten Merkmalskombinationen ergibt.

### Bezugszeichenliste:

| | |
|---|---|
| 2 | Pumpenstufenanordnung |
| 4 | Pumpenstufe |
| 6 | Pumpenstufe |
| 8 | Pumpenstufe |
| 10 | Pumpenstufe |
| 12 | Außenzahnrad |
| 14 | Außenzahnrad |
| 16 | Außenzahnrad |
| 18 | Außenzahnrad |
| 20 | Außenzahnrad |
| 22 | Außenzahnrad |
| 24 | Trockensumpf |
| 24_{I} | Trockensumpf - Bereich I |
| 24_{II} | Trockensumpf - Bereich II |
| W | Wandung |
| 26 | Öltank |
| 28 | Leitung |
| 30 | Leitung |
| 32 | Leitung |
| 34 | Leitung |
| 36 | Leitung |
| 38 | Leitung |
| 40 | Leitung |
| 42 | Leitung |
| 50 | Pumpengehäuseteil |
| 52 | erster Pumpendeckel |
| 54 | zweiter Pumpendeckel |
| V₁ | erster Verbraucher / Fahrzeuggetriebe |
| V₂ | zweiter Verbraucher / Elektro-Motor - Fahrzeugantrieb |
| M | E-Motor / elektrischer Antrieb - Pumpenstufenanordnung |
| ZM₁ | Zahnradmittelpunkt |
| ZM₂ | Zahnradmittelpunkt |
| ZM₃ | Zahnradmittelpunkt |
| ZM₄ | Zahnradmittelpunkt |
| ZM₅ | Zahnradmittelpunkt |
| ZM₆ | Zahnradmittelpunkt |
| ZA₁ | erste Zahnradanordnung |
| ZA₂ | zweite Zahnradanordnung |
| PG | Pumpengehäuse |
| SE_{I} | erster Pumpen-Saugstufen-Sauganschluss (E = Eingang) |
| SE_{II} | zweiter Pumpen-Saugstufen-Sauganschluss (E = Eingang) |
| SA_{I} | erster Pumpen-Saugstufen-Druckanschluss (A = Ausgang) |
| SA_{II} | zweiter Pumpen-Saugstufen-Druckanschluss (A = Ausgang) |
| DE_{I} | erster Pumpen-Druckstufen-Sauganschluss (E = Eingang) |
| DE_{II} | zweiter Pumpen-Druckstufen-Sauganschluss (E = Eingang) |
| DA_{II} | erster Pumpen-Druckstufen-Druckanschluss (A = Ausgang) |
| DA_{II} | zweiter Pumpen-Druckstufen-Druckanschluss (A = Ausgang) |
| SS | Saugstufe |
| DS | Druckstufe |
| DI | Dichtung |
| Ass | Ansaugung - Saugstufe |
| A_{SS1} | erste Ansaugung - Saugstufe |
| Ass2 | zweite Ansaugung - Saugstufe |
| A_{SD} | druckseitiger Ausgang - Saugstufe |
| A_{SD1} | erster druckseitiger Ausgang - Saugstufe |
| A_{SD2} | zweiter druckseitiger Ausgang - Saugstufe |
| A_{SD} | Ansaugung - Druckstufe |
| A_{SD1} | erste Ansaugung - Druckstufe |
| A_{SD2} | zweite Ansaugung - Druckstufe |
| A_{SD} | druckseitiger Ausgang - Druckstufe |
| A_{SD1} | erster druckseitiger Ausgang - Druckstufe |
| A_{SD2} | zweiter druckseitiger Ausgang - Druckstufe |

## Patentansprüche

1. Einsteckpumpe zur Anordnung an einem zumindest ein- oder zweistufigen Getriebe zum Antrieb eines Fahrzeugs, wobei die Einsteckpumpe an einem Gehäuse (62, 64) des Getriebes anflanschbar ist und dabei in das Getriebegehäuse (62, 64) hineinragt, wobei die Einsteckpumpe zur Schmierölversorgung zumindest eines Verbrauchers ausgebildet ist,
wobei die Einsteckpumpe :
mindestens zwei Pumpen-Saugstufen (4, 6) zur Ansaugung eines Schmieröls aus einem als Trockensumpf fungierenden ersten Ölbehälter (24) und zur Förderung des Schmieröls in einen als Öltank fungierenden zweiten Ölbehälter (26) sowie mindestens zwei Pumpen-Druckstufen (8, 10) zur Ansaugung des Schmieröls aus dem zweiten Ölbehälter (26) und zur Förderung zum Verbraucher umfasst,
wobei die Pumpen-Saugstufen (4, 6) und die Pumpen-Druckstufen (8, 10) zueinander beabstandet in einem Pumpengehäuse (PG) angeordnet sind und eine gemeinsame Antriebswelle (56) aufweisen,
wobei die Pumpen-Saugstufen (4, 6) durch eine erste Anordnung (ZA₁) von mindestens drei miteinander kämmenden Außenzahnrädern (12, 14, 16) gebildet sind, die in einer ersten Ebene liegen, und wobei die Pumpen-Druckstufen (8, 10) durch eine zweite Anordnung (ZA₂) von mindestens drei miteinander kämmenden Außenzahnrädern (18, 20, 22) gebildet sind, die in einer zweiten Ebene liegen, wobei die erste Ebene und die zweite Ebene parallel zueinander liegen,
wobei zumindest zwei der jeweiligen Zahnradmittelpunkte (ZM₁, ZM₂, ZM₃) der ersten Außenzahnradanordnung (ZA₁) sowie zumindest zwei der jeweiligen Zahnradmittelpunkte (ZM₄, ZM₅, ZM₆) der zweiten Außenzahnradanordnung (ZA₂) in einer gemeinsamen Ebene (E - E) angeordnet sind, welche das Pumpengehäuse (PG) in einer Längsrichtung (X - X) schneidet und welche als solche orthogonal zur ersten und zweiten Ebene liegt.

2. Einsteckpumpe nach Anspruch 1, wobei die jeweiligen Zahnradmittelpunkte (ZM₁, ZM₂, ZM₃) aller Zahnräder (12, 14, 16) der ersten Außenzahnradanordnung (ZA₁) sowie die jeweiligen Zahnradmittelpunkte (ZM₄, ZM₅) aller Zahnräder (18, 20, 22) der zweiten Außenzahnradanordnung (ZA₂) in der Ebene (E - E) angeordnet sind.

3. Einsteckpumpe nach einem der Ansprüche 1 bis 2, wobei der erste Ölbehälter (24) und/oder der zweite Ölbehälter (26) ein Ölreservoir im Inneren des Getriebes (62, 64) bildet/bilden.

4. Einsteckpumpe nach einem der vorhergehenden Ansprüche, wobei die Einsteckpumpe als ein im Wesentlichen zylinderförmiger Körper ausgebildet ist.

5. Einsteckpumpe nach einem der vorhergehenden Ansprüche, wobei eine hydraulische Anbindung der Pumpen-Saugstufen (4, 6) und/oder der zumindest einen Pumpen-Druckstufe (8, 10) zum Ölreservoir radial zum jeweiligen Abschnitt des Pumpengehäuses (PG) ausgeführt ist.

6. Einsteckpumpe nach Anspruch 5, wobei ferner eine hydraulische Anbindung zur Druckseite der zumindest einen Pumpen-Druckstufe (8, 10, A_{DD1}, A_{DD2}) stirnseitig am in das Getriebegehäuse (62, 64) hineinragenden Ende des Pumpengehäuses (PG) vorgesehen ist.

7. Einsteckpumpe nach Anspruch 6, wobei ferner eine hydraulische Anbindung zur Saugseite der Pumpen-Saugstufen (4, 6, A_{SS1}, A_{SS2}) stirnseitig am in das Getriebegehäuse (62, 64) hineinragenden Ende des Pumpengehäuses (PG) vorgesehen ist.

8. Einsteckpumpe nach Anspruch 6, wobei ferner eine hydraulische Anbindung zur Druckseite der Pumpen-Saugstufen (4, 6, A_{SD}) sowie zur Saugseite der zumindest einen Pumpen-Druckstufe (8, 10, A_{DS}) stirnseitig am in das Getriebegehäuse (62, 64) hineinragenden Ende des Pumpengehäuses (PG) vorgesehen ist.

9. Einsteckpumpe nach einem der vorhergehenden Ansprüche, wobei der erste Ölbehälter (24) mittels zumindest einer Wandung (W) in mindestens zwei Bereiche (24_{I}, 24_{II}) unterteilt ist.

10. Einsteckpumpe nach einem der vorhergehenden Ansprüche, wobei die gemeinsame Antriebswelle (30) elektromotorisch und/oder mechanisch angetrieben ist.

11. Verwendung einer Einsteckpumpe nach einem der vorhergehenden Ansprüche 1 bis 10 zur Schmierölversorgung eines zumindest ein- oder zweistufigen Getriebes zum Antrieb eines Fahrzeugs.

12. Verwendung einer Einsteckpumpe nach Anspruch 11, wobei die Einsteckpumpe ferner zur Kühlung eines ein Fahrzeug antreibenden Elektro-Motors verwendet wird.

13. Fahrzeuggetriebe zum Antrieb eines Fahrzeugs, wobei das Fahrzeuggetriebe eine Einsteckpumpe nach einem der vorhergehenden Ansprüche 1 bis 10 aufweist.

## Claims

1. Plug-in pump for arrangement on an at least one- or two-stage transmission for driving a vehicle, wherein the plug-in pump is able to be flange-mounted on a housing (62, 64) of the transmission and, in this case, projects into the transmission housing (62, 64), wherein the plug-in pump is configured for supplying lubricating oil to at least one consumer,
wherein the plug-in pump:
comprises at least two pump suction stages (4, 6) for sucking in a lubricating oil from a first oil container (24), which functions as a dry sump, and for conveying the lubricating oil into a second oil container (26), which functions as an oil tank, and comprises at least two pump pressure stages (8, 10) for sucking in the lubricating oil from the second oil container (26) and for conveyance to the consumer,
wherein the pump suction stages (4, 6) and the pump pressure stages (8, 10) are arranged spaced apart from one another in a pump housing (PG) and have a common drive shaft (56),
wherein the pump suction stages (4, 6) are formed by a first arrangement (ZA₁) of at least three external gears (12, 14, 16) which mesh with one another and which lie in a first plane, and wherein the pump pressure stages (8, 10) are formed by a second arrangement (ZA₂) of at least three external gears (18, 20, 22) which mesh with one another and which lie in a second plane, wherein the first plane and the second plane are parallel to one another,
wherein at least two of the respective gear centre points (ZM₁, ZM₂, ZM₃) of the first external-gear arrangement (ZA₂) and at least two of the respective gear centre points (ZM₄, ZM₅, ZM₆) of the second external-gear arrangement (ZA₂) are arranged in a common plane (E - E) which intersects the pump housing (PG) in a longitudinal direction (X - X) and which, as such, is orthogonal to the first and second planes.

2. Plug-in pump according to Claim 1, wherein the respective gear centre points (ZM₁, ZM₂, ZM₃) of all the gears (12, 14, 16) of the first external-gear arrangement (ZA₁) and the respective gear centre points (ZM₄, ZM₅) of all the gears (18, 20, 22) of the second external-gear arrangement (ZA₂) are arranged in the plane (E - E).

3. Plug-in pump according to either of Claims 1 and 2, wherein the first oil container (24) and/or the second oil container (26) form(s) an oil reservoir in the interior of the transmission (62, 64).

4. Plug-in pump according to one of the preceding claims, wherein the plug-in pump is in the form of a substantially cylindrical body.

5. Plug-in pump according to one of the preceding claims, wherein a hydraulic connection of the pump suction stages (4, 6) and/or of the at least one pump pressure stage (8, 10) to the oil reservoir is realized radially with respect to the respective section of the pump housing (PG).

6. Plug-in pump according to Claim 5, wherein furthermore provision is made of a hydraulic connection to the pressure side of the at least one pump pressure stage (8, 10, A_{DD1}, A_{DD2}) at the end face of that end of the pump housing (PG) which projects into the transmission housing (62, 64).

7. Plug-in pump according to Claim 6, wherein furthermore provision is made of a hydraulic connection to the suction side of the pump suction stages (4, 6, A_{SS1}, A_{SS2}) at the end face of that end of the pump housing (PG) which projects into the transmission housing (62, 64).

8. Plug-in pump according to Claim 6, wherein furthermore provision is made of a hydraulic connection to the pressure side of the pump suction stages (4, 6, A_{SD}) and to the suction side of the at least one pump pressure stage (8, 10, A_{DS}) at the end face of that end of the pump housing (PG) which projects into the transmission housing (62, 64).

9. Plug-in pump according to one of the preceding claims, wherein the first oil container (24) is subdivided into at least two regions (24_{I}, 24_{II}) by means of at least one wall (W).

10. Plug-in pump according to one of the preceding claims, wherein the common drive shaft (30) is driven electromotively and/or mechanically.

11. Use of a plug-in pump according to one of preceding Claims 1 to 10 for supplying lubricating oil to an at least one- or two-stage transmission for driving a vehicle.

12. Use of a plug-in pump according to Claim 11, wherein the plug-in pump is furthermore used for cooling an electric motor which drives a vehicle.

13. Vehicle transmission for driving a vehicle, wherein the vehicle transmission has a plug-in pump according to one of preceding Claims 1 to 10.

## Revendications

1. Pompe enfichable destinée à être agencée sur une transmission à au moins un ou deux étages pour l'entraînement d'un véhicule, la pompe enfichable pouvant être bridée sur un boîtier (62, 64) de la transmission et pénétrant alors dans le boîtier de transmission (62, 64), la pompe enfichable étant configurée pour alimenter en huile lubrifiante au moins un consommateur,
la pompe enfichable :
comprenant au moins deux étages d'aspiration de pompe (4, 6) pour aspirer une huile lubrifiante à partir d'un premier récipient d'huile (24) fonctionnant en tant que carter sec et pour transporter l'huile lubrifiante dans un deuxième récipient d'huile (26) fonctionnant en tant que cuve d'huile, ainsi qu'au moins deux étages de pression de pompe (8, 10) pour aspirer l'huile lubrifiante à partir du deuxième récipient d'huile (26) et pour la transporter vers le consommateur,
les étages d'aspiration de pompe (4, 6) et les étages de pression de pompe (8, 10) étant agencés à distance les uns des autres dans un boîtier de pompe (PG) et présentant un arbre d'entraînement commun (56),
les étages d'aspiration de pompe (4, 6) étant formés par un premier agencement (ZA₁) d'au moins trois roues dentées extérieures (12, 14, 16) engrenant les unes avec les autres, qui se situent dans un premier plan, et les étages de pression de pompe (8, 10) étant formés par un deuxième agencement (ZA₂) d'au moins trois roues dentées extérieures (18, 20, 22) engrenant les unes avec les autres, qui se situent dans un deuxième plan, le premier plan et le deuxième plan étant parallèles entre eux,
au moins deux des centres de roues dentées respectifs (ZM₁, ZM₂, ZM₃) du premier agencement de roues dentées extérieures (ZA₁) ainsi qu'au moins deux des centres de roues dentées respectifs (ZM₄, ZM₅, ZM₆) du deuxième agencement de roues dentées extérieures (ZA₂) étant agencés dans un plan commun (E-E) qui coupe le boîtier de pompe (PG) dans une direction longitudinale (X-X) et qui, en tant que tel, est orthogonal au premier et au deuxième plan.

2. Pompe enfichable selon la revendication 1, dans laquelle les centres de roues dentées respectifs (ZM₁, ZM₂, ZM₃) de toutes les roues dentées (12, 14, 16) du premier agencement de roues dentées extérieures (ZA₁) ainsi que les centres de roues dentées (ZM₄, ZM₅) de toutes les roues dentées (18, 20, 22) du deuxième agencement de roues dentées extérieures (ZA₂) sont agencés dans le plan (E-E).

3. Pompe enfichable selon l'une quelconque des revendications 1 à 2, dans laquelle le premier récipient d'huile (24) et/ou le deuxième récipient d'huile (26) forme(nt) un réservoir d'huile à l'intérieur de la transmission (62, 64).

4. Pompe enfichable selon l'une quelconque des revendications précédentes, la pompe enfichable étant configurée sous la forme d'un corps essentiellement cylindrique.

5. Pompe enfichable selon l'une quelconque des revendications précédentes, dans laquelle une liaison hydraulique des étages d'aspiration de pompe (4, 6) et/ou de l'au moins un étage de pression de pompe (8, 10) vers le réservoir d'huile est réalisée radialement par rapport à la section respective du boîtier de pompe (PG).

6. Pompe enfichable selon la revendication 5, dans laquelle il est prévu en outre une liaison hydraulique vers le côté de pression de l'au moins un étage de pression de pompe (8, 10, A_{DD1}, A_{DD2}) sur le côté frontal à l'extrémité du boîtier de pompe (PG) qui pénètre dans le boîtier de transmission (62, 64).

7. Pompe enfichable selon la revendication 6, dans laquelle il est prévu en outre une liaison hydraulique vers le côté d'aspiration des étages d'aspiration de pompe (4, 6, A_{SS1}, A_{SS2}) sur le côté frontal à l'extrémité du boîtier de pompe (PG) qui pénètre dans le boîtier de transmission (62, 64).

8. Pompe enfichable selon la revendication 6, dans laquelle il est prévu en outre une liaison hydraulique vers le côté de pression des étages d'aspiration de pompe (4, 6, A_{SD}) ainsi que vers le côté d'aspiration de l'au moins un étage de pression de pompe (8, 10, A_{DS}) sur le côté frontal à l'extrémité du boîtier de pompe (PG) qui pénètre dans le boîtier de transmission (62, 64).

9. Pompe enfichable selon l'une quelconque des revendications précédentes, dans laquelle le premier récipient d'huile (24) est divisé en au moins deux zones (24_{I}, 24_{II}) au moyen d'au moins une paroi (W) .

10. Pompe enfichable selon l'une quelconque des revendications précédentes, dans laquelle l'arbre d'entraînement commun (30) est entraîné par un moteur électrique et/ou mécaniquement.

11. Utilisation d'une pompe enfichable selon l'une quelconque des revendications 1 à 10 précédentes pour l'alimentation en huile lubrifiante d'une transmission à au moins un ou deux étages pour l'entraînement d'un véhicule.

12. Utilisation d'une pompe enfichable selon la revendication 11, dans laquelle la pompe enfichable est en outre utilisée pour refroidir un moteur électrique entraînant un véhicule.

13. Transmission de véhicule pour l'entraînement d'un véhicule, la transmission de véhicule présentant une pompe enfichable selon l'une quelconque des revendications 1 à 10 précédentes.
